# EUROPEAN PATENT APPLICATION

(11) **EP 0 566 815 A1**
(43) Date of publication of application: **27.10.1993**
(21) Application number: 92850134.5
(22) Date of filing: 23.06.1992
(51) Int. Cl.: H05B 41/29

(54) **A low-pressure gas discharge lamp of the fluorescent lamp type**

(30) Priority: 24.04.1992 SE 9201293
(71) Applicant: Lumalampan Aktiebolag, S-371 23 Karlskrona (SE)
(72) Inventor: Abramsson, Lennart, S-371 60 Lyckeby (SE); Axelsson, Torsten, S-371 63 Lyckeby (SE)
(74) Representative: Forssell, Gunilla

(57) **Abstract**

A fluorescent lamp intended as a replacement for incandescent bulbs in existing lamp fittings has all of its requisite series impedance means incorporated in the lamp base (1) and in a housing (2) formed on the base. Means for controlling ignition and operation of the lamp are collected in an integrated circuit (9). These means coact with a choke (8) and capacitor (16) mounted on a circuit card (5) and forming a resonance circuit. The circuit card (5) also supports conventional means (10) for rectifying and smoothing alternating voltage supplied to the lamp.

## Description

The present invention relates to a low-pressure gas discharge lamp of the fluorescent lamp type comprising an ignition device which includes series impedance means, said lamp being intended to replace incandescent bulbs or lamps in existing lamp fittings.

It was realized already in the early stages of the development of compact fluorescent lamps, or tubes, that such lamps would be substantially longer than incandescent bulbs, even those having the lowest useful lighting power, despite using a plurality of mutually parallel tubes connected by intermediate U-connectors. This resulted in the need for lamp fittings of different construction, this need being further accentuated by the necessity of providing room in the lamp fitting for the series impedance means required for a gas discharge lamp. When the ignition device was placed in a housing of square cross-section and built into the lamp base and extended in the longitudinal direction of the lamp, this configuration ultimately being standardized, it became possible to use this type of lighting in a very restricted number of different types of lamp fittings.

The fluorescent lamp was the next stage in the development, in which work was specifically directed to producing a replacement for the incandescent bulb. The object was to construct the lamp with a conventional screw base (E27). Those components hitherto available for the construction of the series impedance means have been so space-consuming as to render it impossible to realize the desire for a composite lamp unit having the size of a conventional incandescent bulb. An adapter described in SE-B-8501136-9 was proposed as an intermediate stage in this development. This adapter was provided on a screw base with a coupling housing which included the aforesaid series impedance means and also a recessed part in which the base of a compact fluorescent lamp was connected. The structural length of this combination was nearly twice the axial extension of a standard incandescent bulb.

A certain degree of miniaturization of the series impedance means, and primarily the capacitors, resulted in a fluorescent lamp in combination with a screw base, a housing for the series impedance means and a discharge tube (EP-A1-0349083). Irrespective of this miniaturization, however, the total length of this lamp was still so large, due to the axial extension of the component housing, that only a few existing lamp fittings were able to accommodate the lamp tube.

The use of the described lamps in closed lamp globes, for instance of the type fitted to walls of bathrooms and in industrial kitchens is totally excluded. Furthermore, those fluorescent lamps known hitherto are not suitable for use in smaller table lamps, and ceiling-mounted lamp fittings which include shades fitted on arms or like appendages, where a fluorescent lamp of hitherto known design would project beneath the edge of the shade with subsequent dazzling effect.

The object of the present invention is to provide a gas discharge lamp whose axial length is so short as to enable the lamp to replace incandescent lamps in existing lamp fittings, without having a dazzling effect or without occurring other drawbacks. Furthermore, the gas discharge principle shall allow the novel lamp to be used in the smallest of lamp globes intended for standard incandescent bulbs, since the heat emitted in relation to the light emitted is substantially smaller than from lamps of this kind.

This object of the present invention, and further objects thereof and other advantages afforded thereby are achieved with an inventive lamp having the characteristic features set forth in the following Claims. A low-pressure gas discharge lamp of the fluorescent lamp type has all the requisite series impedance means essentially incorporated in the lamp base, which may be a traditional E27-screw base or, for instance, a B22-bayonet base. When the ignition and operating means of the lamp are highly miniaturized, they can be housed in an E14-screw base. Incandescent bulbs fitted with this type of base normally have a lighting power of 15-25 or 40 W, which corresponds to fluorescent tubes, or lamps, of maximum 7 W. The heat generated by this relatively limited part of the power can be dissipated continuously so as to ensure that the electronics in the base will not be subjected to excessive temperatures. This is extremely important in view of the extremely small sizes of the components used, these small sizes being necessary in order to be able to accommodate the components in the lamp base.

The winding, hermetically sealed glass tube that forms the lamp gas discharge chamber will protrude down in a housing built on the lamp base. This glass tube is coated internally with fluorescent substances in a conventional manner, and electrodes are mounted at the mutually distal ends of the discharge chamber, wherein a discharge is maintained between the electrodes when the lamp is ignited. Current conductors connected to the electrodes extend out through the heat-sealed or fused ends of the glass tube and are connected to a printed circuit card mounted in the housing. This card is used as a carrier for the requisite series impedance means. Thus, the printed circuit card has mounted thereon a transformer, choke and capacitor for igniting and operating the lamp. The circuit card is also connected to an integrated circuit developed to this particular end and functioning, among other things, to control heating of the cathodes at ignition, this control taking place with respect to current frequency and preheating time. Subsequent to lamp ignition, the integrated circuit controls the operation frequency and current strength desired. The preheating frequency and ignition frequency of the current is controlled through the intermediary of an incorporated amplifier and a voltage-controlled oscillator circuit in the order of 80 kHz (kilohertz) and 50 kHz respectively. The integrated circuit also includes a voltage conversion block and protecting and monitoring circuits for the following functions:
a) The temperature of the silicon plate is monitored by a thermal monitor, for instance a thermistor, which produces a logic signal which breaks the circuit upon the occurrence of temperatures above a predetermined level. The thermal monitor may be constructed so as to break the circuit at a specific temperature and so as not to remake the circuit until a considerably lower temperature is reached. In this case, the lamp remains extinguished until the circuit has reached a temperature at which the circuit components are safe from the effect of excessive heat. The fluorescent tube will therewith be extinguished and ignited automatically so as to indicate that the fluorescent lamp has been placed in an environment of excessively high temperature.
b) A so-called shut-down circuit which continuously measures the impedance of the lamp and breaks the circuit completely at abnormal impedance values, which takes place in the event of a logically determined loading current. If the shut-down circuit detects a loading current which exceeds a normal value and reaches a logically determined level above this value, the circuit is completely shut down. This means that the mains voltage must also be broken before the integrated circuit will initiate a new attempt to start the lamp.
c) A circuit which is able to control the ignition and running of the lamp with the aid of externally applied signals. This circuit enables the lamp to be ignited and extinguished by impulses emitted from a suitably positioned photoresistor (photo-cell).

The integrated circuit also includes an oscillator which is able to direct the desired frequency by voltage control. Furthermore, a block in the integrated circuit is constructed for voltage conversion, in all essentials for the circuit's own need of different low voltages. The output signals from the integrated circuit are amplified by one or more MOSFET-transistors (a field-effect transistor built around a metal-oxide type semiconductor).

For the purpose of converting alternating voltage to direct current voltage, the circuit card includes a diode bridge constructed essentially as a Wheatstone-bridge, which produces a preferably pulsating voltage, i.e. a half-wave rectified alternating voltage. This voltage can be smoothed by means of a capacitor, also mounted on the circuit card, so as to obtain minimum ripple level, i.e. small voltage variations.

In order to ensure that the starting and operating frequencies will have stable and effective levels, two parallel-connected resistors are mounted on the circuit card between the integrated circuit and the rectified or unidirectional neutral conductors of the lamp. The integrated circuit also includes means which switch between the two resistances when the frequency of the lamp current sweeps from the preheating frequency over the ignition frequency, thereby obtaining a stable operating fre-quency.

The MOSFET-transistor amplifies the current from the integrated circuit and functions as a power transistor which controls the current supply to the fluorescent tube while the tube is ignited. Current is passed from the transistor through a choke which equalizes the voltage curve through the intermediary of the choke inductance. The higher the frequency of the current passing through the choke, the higher the choke impedance.

Current supply to the circuit card can be achieved in a simpler fashion, by permitting one pole or terminal of the circuit card to lie in effective abutment with the inner surface of the base. The other pole or terminal is connected to the base bottom contact. With a view to the heat generated by the electronic components and the small amount of air space in the lamp base, it has been found advantageous to provide the circuit card with good mechanical contact with the inner surface of the lamp base. This will ensure that heat is conducted to the lamp base and from there to the lamp fitting. This will avoid subjecting the electronic devices to harmful overtemperatures, unless the lamp has been placed in excessively high ambient temperatures. In this latter case, the aforedescribed thermal monitor will come into operation.

An alternative method of dissipating the heat generated is to incorporate in the lamp base and the housing a body which has good thermal conductivity and which is in good contact with the components on the circuit card.

A preferred embodiment of the invention will now be described in more detail with reference to the accompanying drawings, in which
- Figure 1: illustrates an inventive fluorescent lamp, with the lamp base partly cut away; and

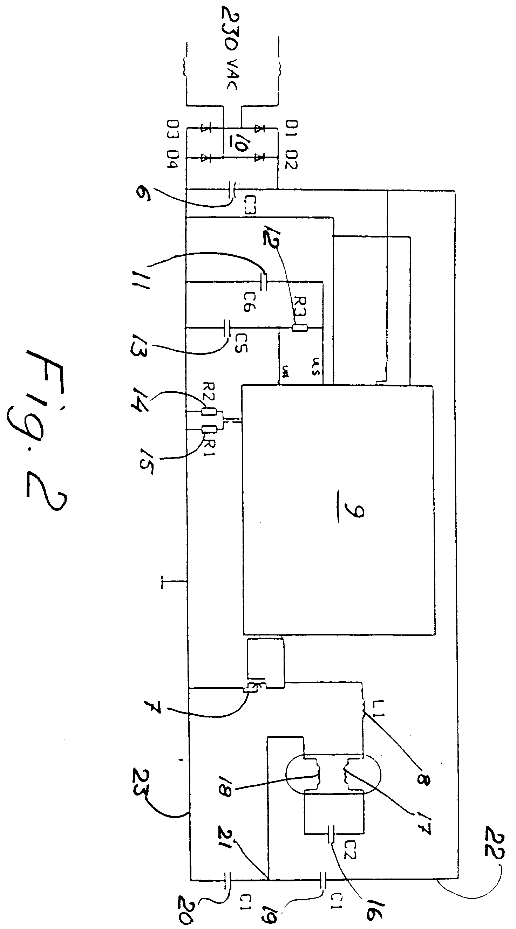

- Figure 2: is a circuit diagram of the lamp electronics.

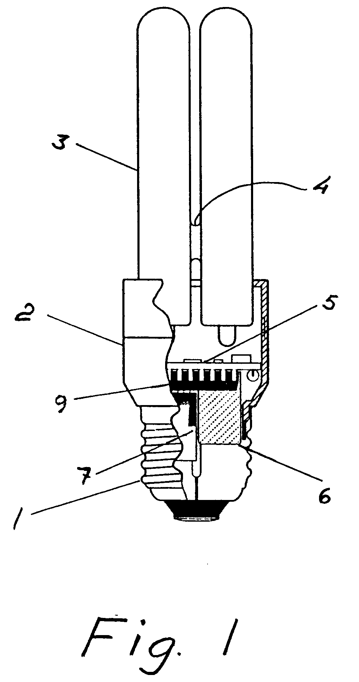

The fluorescent lamp illustrated in Figure 1 comprises an E27-screw base 1, an axially dividable housing 2 mounted on the base 1, and a so-called four-finger fluorescent tube 3. The tube 3 is configured as two U-shaped glass tubes with a connection 4 located close to respective one end of the U, thereby to form a composite, winding discharge chamber. The tubes are coated internally with a combination of fluorescent substances adapted to the desired colour of the light emitted, in a conventional manner. Located in the mutually distal ends of the winding discharge chamber are electrodes between which a discharge column is sustained when the lamp is ignited. The wires through which current is delivered to these electrodes are drawn through the hermetically sealed, fused ends of the U-tubes. These current supply wires (not shown) are connected to a circuit card 5 mounted in the housing 2.

The circuit card 5 functions as a carrier means for the series impedance means of the lamp, said means being either accommodated in a cavity in the screw base 1 or mounted on the circuit card 5. Those components which take up most space, such as an electrolyte capacitor 6 for smoothing d.c. voltages and a field effect transistor 7 of the metal oxide type (MOSFET) for amplifying the lamp operating current may extend down into the screw base, together with a choke 8 and additional capacitors. Those components which take up the least space, such as resistors, a diode bridge and the smallest of the capacitors used may be mounted on the surface of one side of the circuit card 5, suitably the side remote from the discharge chamber, while an integrated circuit 9 which incorporates control function means is connected to the other side of the circuit card 5.

Ignition and operation of the lamp is effected in the following manner. The lamp is powdered by nomalized alternating current voltage, which is standard in Europe, this voltage being applied to a diode bridge 10 and there rectified. The rectified voltage is stepped down to a logic level in the order of 8-10 V. This voltage is taken out at VLS. For the purpose of stabilizing this voltage level, a decoupling capacitor is connected to the neutral conductor of the rectified voltage. For the purpose of obtaining a preheating time adapted to the lamp electrodes, there is used an RC-circuit comprised of a resistor 12 and a capacitor 13 whose values determine the preheating time. For example, in the case of an
11 W fluorescent lamp, a resistor 12 of 330 kΩ and a capacitor 13 of 3.3 µF capacitance have been found suitable in the RC-circuit.

The voltage is increased in the integrated circuit before the current passes into a voltage-controlled oscillator, which is connected to the unidirectional or rectified neutral conductors of the lamp by two resistors 14, 15. This oscillator functions as a crystal clock and delivers an alternating voltage to a voltage conversion block directly connected to a drive stage. Together with the resistors 14, 15, which are alternatively activated, the oscillator produces a desired frequency sweep on the voltage from the preheating frequency of about 80 kHz over the ignition frequency to the operating frequency of 30-60 kHz.

The square-wave voltage arriving from the drive output of the integrated circuit steers the MOSFET-transistor 7. This drives the gas discharge lamp via the choke 8. The choke 8 and a capacitor 16 together form a resonance circuit which, when the lamp is ignited, build-up the voltage between the lamp cathodes 17, 18 until a discharge takes place. The lamp impedance therewith falls, so that the frequency of the resonance circuit will change to a stable operating frequency. The capacitor 16 is connected between the cathodes 17 and 18, outside the gas discharge chamber.

When the lamp is placed in very cold surroundings, the resonance circuit will increase the voltage, if necessary up to 1000 V, in order to initiate the discharge.

The passage of d.c. voltage through the lamp is prevented by two capacitors 19, 20, one on each side of a connecting point 21, where the lamp is connected to a conductor 22 for rectified pulse voltage and a rectified neutral conductor 23. The capacitance of these capacitors shall be much higher than the capacitance of the capacitor 16, so as not to lower the maximum ignition voltage.

## Claims

1. A low-pressure gas discharge lamp of the fluorescent lamp type having built-in series impedance means, **characterized** in that there is provided in the lamp base (1) and a housing (2) formed on said base an integrated circuit (9) which includes means which, when igniting the lamp, function to control preheating of the cathode with respect to frequency and time, and when the lamp is running function to control frequency and current; and in that there is included a voltage-controlled oscillator, and a voltage conversion block, and a connected amplifier, and in that the integrated circuit (9) is connected to at least one circuit card (5) having mounted thereon a transformer, choke (8) and capacitor (16).

2. A lamp according to Claim 1, **characterized** in that the integrated circuit (9) included in the series impedance means includes current-supply disconnecting means for breaking the circuit in the event of a thermal or electric overload.

3. A lamp according to Claim 1 or 2, **characterized** in that in addition to the transformer, choke (8) and capacitor (16), the circuit card (5) also carries a diode bridge (10) for rectifying supply voltage.

4. A lamp according to Claim 1 or 2, **characterized** in that the circuit card (5) has mounted thereon an electrolyte capacitor (6) which delivers to the integrated circuit (9) a d.c. voltage of low ripple tendency.

5. A lamp according to any one of the preceding Claims, **characterized** in that mounted on the circuit card (5) between the integrated circuit (9) and the rectified or unidirectional neutral conductors (23) of the lamp are two parallel resistors (14, 15) which are adapted for the starting and operating frequencies of the lamp.

6. A lamp according to any one of the preceding Claims, **characterized** in that one or more MOSFET-transistors (7) is/are connected between the output of the integrated circuit (9) and the lamp choke (8).

7. A lamp according to any one of the preceding Claims, **characterized** in that one terminal of the circuit card (5) is connected to the metallic inner surface of the base (1).

8. A lamp according to any one of the preceding Claims, **characterized** in that the circuit card (5) is configured for good mechanical contact with the inner surface of the lamp base (1) and for dissipating generated heat from the circuit card (5).

9. A lamp according to any one of the preceding Claims, **characterized** in that the integrated circuit (9) operates at a voltage of up to 400 volts.
